# EUROPEAN PATENT SPECIFICATION

(11) **EP 2 137 993 B1**
(45) Date of publication and mention of the grant of the patent: **16.05.2012**
(21) Application number: 07728357.0
(22) Date of filing: 20.04.2007
(51) Int. Cl.: H04W 24/02

(54) **HANDLING OF DYNAMIC NEIGHBOURING CELL RELATIONS USING A TIMETOLIVE CONCEPT**
BEHANDLUNG VON DYNAMISCHEN NACHBARZELLENBEZIEHUNGEN UNTER VERWENDUNG EINES TIMETOLIVE-KONZEPTS
TRAITEMENT DE RELATIONS DE CELLULES VOISINES DYNAMIQUES À L'AIDE D'UN CONCEPT DE TEMPS À VIVRE

(43) Date of publication of application: 30.12.2009
(73) Proprietor: Telefonaktiebolaget LM Ericsson (publ), 164 83 Stockholm (SE)
(72) Inventor: QUILTY, John, Athlone (IE)
(74) Representative: Stasiewski, Piotr Grzegorz
(86) International application number: PCT/EP2007/053898
(87) International publication number: WO 2008/128569

(56) References cited:
- EP-A- 1 124 400
- EP-A- 1 775 981
- WO-A-2008/005225
- US-A- 6 119 005
- US-A1- 2003 190 916
- CAMBRAY-DE MATHAN DE B ET AL: "L'OPTIMISATION DES RESEAUX CELLULAIRES ASSISTEE PAR ORDINATEUR: LE LOGICIEL RNO (RADIO NETWORK OPTIMISATION) COMPUTER-AIDED OPTIMIZATION OF CELLULAR NETWORKS: THE RNO (RADIO NETWORK OPTIMISATION) SOFTWARE" ANNALES DES TELECOMMUNICATIONS - ANNALS OF TELECOMMUNICATIONS, GET LAVOISIER, PARIS, FR, vol. 58, no. 7/8, July 2003 (2003-07), pages 964-1000, XP001186072 ISSN: 0003-4347

## Description

### TECHNICAL FIELD

The present invention relates to a network element, such as a base station controller, for a cellular network comprising one or more cells being served by at least one transceiver for enabling communication sessions with a mobile cellular terminal. The element comprises communication means adapted for communicating with other network nodes within the same or other networks. The element further comprises register software adapted for creating, configuring and/or removing information about the cell on which a communication session is running and its relationship to at least one neighbouring cell to which a running communication session can be transferred and resource management software adapted for managing the communication session between the transceiver and the terminal. The present invention also relates to a method for handling neighbouring cell relationships for a network element and a cellular network.

### BACKGROUND

A cellular network is a radio-based network made up of a number of cells. Each cell exists in a geographical area covered/served by one or more transceivers, positioned in a base station. The cells together cover different areas to provide radio coverage over a wider area than that of one cell. The cellular network comprises a number of fixed main transceivers (on base stations) and a number of distributed mobile transceivers which provides services to the users of the network.

One common method for signal distribution between such transceivers (base stations and cell phones) is Time Division Multiple Access (TDMA), used in the GSM standard combined with Frequency Division Multiple Access (FDMA). Another common method is Code Division Multiple Access (CDMA) used for instance in 3G standards and Orthogonal Frequency Division Multiple Access (OFDMA) used in LTE and WiMAX. CDMA and OFDMA uses a wider frequency band to achieve the same transmission capacity. On the other hand, the frequency band can be used in all cells without any risk of interference. Since each mobile operator has one unique radio frequency band, these signal methods are essential for using the frequency band as much as possible. It is very common now to combine different methods to increase the capacity of the network.

The base station contains the transceivers, antennas and equipment for encrypting/decrypting communication with the base station controller (BSC) serving several base stations. In a UMTS (W-CDMA) the base station controller is known as the Radio Network Controller (RNC). Typically, the base station contains several transceivers to be able to serve several different frequencies within the band. The base stations serve/cover the different cells (geographical areas) of the cellular network and together build the complete network for a supplier. By using directional antennas on a single base station, each pointing in different directions, it is possible to sectorice the base station so that several different cells are served from the same location, using the same frequencies. This increases the traffic capacity of the base station whilst not greatly increasing the interference caused to neighboring cells.

The base/radio station controller is a network element in the network containing software to control and supervise a network or a network segment, a segment being a part of a network. The controller communicates with a large number of transceivers (either directly or through a communication device for a group of transceivers) and for instance controls handover and roaming. The controller keeps a record (list) of the external cells and keeps a geographical map (mapping) of which cells is its own cellular network that have relationship to those external cells, the so called neighbouring cells relationships. The relationship is held in the form of an object-oriented model. A local cell can have relationship with an external cell in its own kind of network or with an external cell in a different kind of network. Creating such a record (list) for a cell is complex and different algorithms are used together with input data from field measurements or computer predictions of radio wave propagation in the areas covered by the cells.

The neighbouring cells relationships are used in case of handover, which is the process for transferring ongoing communication sessions between a mobile phone and the network from one cell to another. Reasons for handover is for instance the mobile phone moving, lack of capacity within one cell, interference in case of FDMA/TDMA or changed moving behavior. Each cell in a cellular network is assigned a list of potential target cells for handover. These are the cells to which it has a neighbouring cell relationship. Roaming is the process when the handover of the communication session is made from its own cellular network to another mobile operator's cellular network. The two operators have an agreement that allows roaming and communication and subscription data is exchanged between their respective cellular networks when roaming. Roaming between networks of different technologies is a great challenge, and there are many standards in how to achieve interoperability between such networks.

The controller network element typically comprises management functionality. An operation and maintenance (O&M) network management system provides a package of network management functions for the operation of the cellular network. The functions refer to operation and maintenance of the network at a system level. Examples of such functions are hardware management, software management, configuration management, performance management and fault management. The management system of a cellular network handles the neighbouring cell relationships. When there are networks for different wireless technologies and networks of different operators, each network has a management system communicating with other management systems. The management systems have traditionally been optimized (using algorithms) by a radio engineer who, using planning tools, analysis data and experience, sends configuration commands to the network via a GUI. The management system are now getting more and more automated as the size and complexity of the networks increases.

The management system often includes a radio resource management (RRM) functionality, implemented into the controller network element. RRM controls co-channel interference and radio transmission characteristics and involves strategies and algorithms for controlling parameters such as handover criteria. RRM is used to utilize the radio spectrum resources and the network infrastructure as efficiently as possible. It concerns multi-user and multi-cell network capacity issues rather than point-to-point channel capacity. Static RRM involves manual and computer aided, fixed cell and network planning, such as channel allocation, frequency allocation and static handover criteria. Dynamic RRM uses schemes to adaptively adjust the radio network parameters to the traffic load, mobile phone positions and service requirements. Dynamic schemes are considered in cellular networks to minimize expensive manual cell planning etc. to improve the efficiency. Examples of dynamic RRM schemes are dynamic channel allocation (DCA), adaptive filtering and dynamic diversity schemes, such as soft handover in which the channel of the source cell is retained and used for a while in parallel with the channel of the target cell. In this case the connection to the target is established before the connection to the source is broken.

The problem with the existing methods relates to the updating of the neighbouring cells relationship. In the management system, the RRM must have knowledge of the radio resources of the neighbouring cell for the updating. This neighbouring cell information and the nature of its relationships to the local cell is often required to be statically configured on the controller today, via the O&M Management system. In some applications performance counters are used and a set of rules advice the cellular network operator on potential problems with their present network configuration on neighbouring cell relationships.

However, such a management of these neighbouring cells relationship is a complex and time consuming business, added to a cellular network operator's operational expenditures (on-going costs for running the network). There are therefore ongoing discussions in the 3GPP organisation on the need to dynamically create and update neighbouring cells relationship based on measurements received from the mobile phones. However, a problem with pure dynamic management of neighbouring relations is to handle neighbouring relationships appearing and disappearing constantly.

The result is that for cells in areas with periodical traffic, relationships may disappear even though the relation is still valid. In order to avoid their disappearance, the relationships need to be kept configured even though no handovers have occurred during a time to live period. Consequently, there will be network overhead and handover delays due to the need to be constantly recreating and deleting the configuration of these relationships. This could lead to degraded handover performance for these cells. On the other and, in case of a purely static configuration there will be dead relationships that should be removed, and it will take too long time to identify and deal with those relationships. While these dead relationships are not identified and removed they will cause degradation in handover performance.

This requirement for static allocation of neighbouring cells relationship makes the management of the information difficult. Ericsson currently has an application named NOX (neighbouring optimization expert) for optimizing the neighbouring cells relationship list for all cells in a network. It helps the operators to add and remove cells from the lists. NOX that takes events and PM data (Performance Management) and provide reports on the performance of each relationship, can create and delete new static relationships based on data.

There is sometimes a need to decide about a change in the relationships faster than NOX provides. NOX depends on 15 days of PM data before it makes a decision and the controller network element will not remove a neighbouring cell relationship unless requested by the O&M Management system. Faulty neighbouring cell relationships leads to an increased number of failed handovers and dropped calls so it is important to remove them from the network when they are no longer needed.

There is known a document related to handover procedure in a wireless network, namely US2003/190916. However devices and operations as in the invention now to be described are neither disclosed nor suggested in this document.

### SUMMARY

The object of the present invention is to solve the above-mentioned problems by providing an alternative method for deletion of unneeded or unwanted cell relations having a big impact on the network traffic if they remain.

The object is achieved by means of a network element, such as a base station controller, for a cellular network comprising one or more cells being served by at least one transceiver for enabling communication sessions with a mobile cellular terminal. The element comprises communication means adapted for communicating with other network nodes within the same or other networks. The element further comprises register software adapted for creating, configuring and/or removing information about the cell on which a communication session is running and its relationship to at least one neighbouring cell to which a running communication session can be transferred and resource management software adapted for managing the communication session between the transceiver and the terminal. The element is further characterized in that the register software is adapted for creating and/or configuring a counter value on each relationship to a neighbouring cell, which value limits the time the neighbouring cell can be part of so that when the counter value corresponds to a removal value the relationship is removed. The register software is further adapted to change the counter value if the relationship is used or exhibits a specific behaviour, so that the relationship will last longer, wherein the counter value consist in a time-to-live counter value.

The object is further achieved by means of a method for handling neighbouring cell relationships for a network element, such as a base station controller in a cellular network, the network comprising one or more cells being served by at least one transceiver for enabling communication sessions with a mobile cellular terminal. The element communicates with other network nodes within the same or other networks. The method comprises the steps of creating, configuring and/or removing information about the cell on which a communication session is running and its relationship to at least one neighbouring cell to which a running communication session can be transferred and managing the communication session between the transceiver and the terminal. The method is further characterized by the steps of creating and/or configuring a counter value for each relationship to a neighbouring cell, which value limits the time the neighbouring cell can be part of so that when the counter value corresponds to a removal value the relationship is removed. The register software is further adapted to change the counter value if the relationship is used or exhibits a specific behaviour, so that the relationship will last longer, wherein the counter value consist in a time-to-live counter value. The object is finally achieved by means of a cellular network.

One advantageous effect of the present invention is that it provides a solution for managing dynamic neighbouring cells relationship in a long term evolution (LTE) network. It prevents having a lot of faulty relations defined in the network while still giving the ability to control the extended lifecycle of the important cell relationships. Another advantageous effect is that the present invention limits the potential problem of cell relationships being constantly recreated and deleted by providing a method of applying hysteresis.

### BRIEF DESCRIPTION OF DRAWINGS

The present invention will now be described more in detail with reference to the appended drawings:
Figure 1 schematically shows a cellular network with a network element according to the present invention.
Figure 2 schematically shows the network element according to figure 1.
Figure 3 shows the first part of a decision flowchart to deicide the creation and/or configuration of a relationship and a counter value.
Figure 4 shows the second part of the flowchart according to figure 3.
Figure 5 shows a flowchart for the interaction between the network element and network nodes when a relationship and counter value is created.

### DETAILED DESCRIPTION

The network element and the method for carrying out the handling of dynamic cell relations will now be described with reference to an embodiment. The embodiment contains a number of features contributing to the present invention. The embodiment described herein discloses a network element, a method and a cellular network.

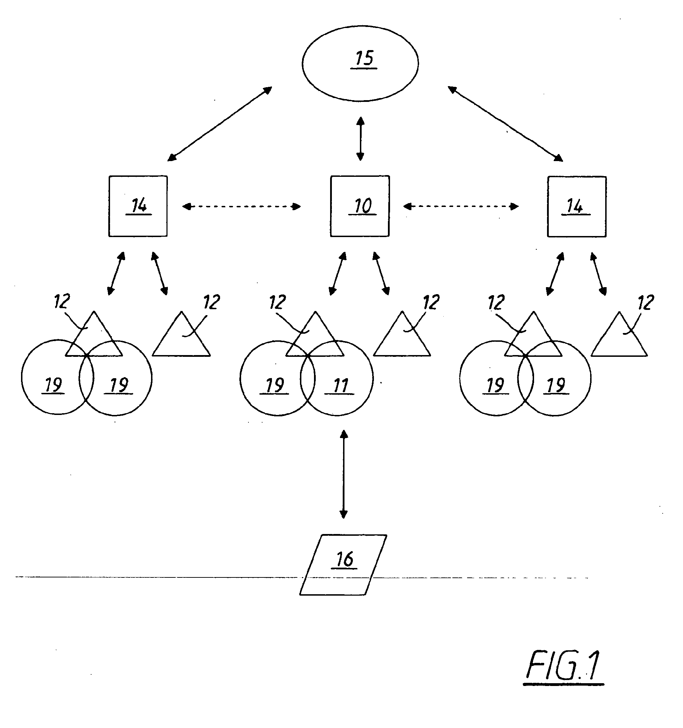

The embodiment comprises a network element 10, such as a base station controller, for a cellular network comprising one or more cells 11, see figure 1. These cells are being served by at least one transceiver 12 which enables communication sessions to take place with a mobile cellular terminal, such as a mobile phone. The element may be part of a radio base station or separated there from.

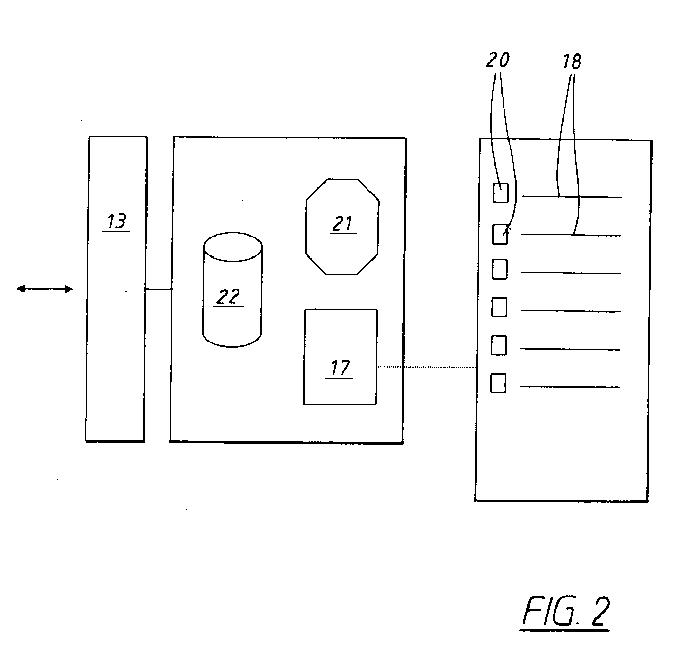

The element comprises communication means 13, see figure 2, adapted for communicating with network nodes within the same or other networks. Such network nodes are other base station controllers 14 and transceivers 12 which the element controls and which serves the cells. It is also an Operation and Maintenance Server 15 being part of an Operation and Maintenance Management System. It is also mobile cellular terminals 16. The communication means may for instance be a configuration management interface, such as CORBA/IIOP, SNMP set actions, NETCONF command files or vendor proprietary commands via a shell based command interface.

The network element also comprises, see figure 2, register software 17 adapted for creating, configuring and/or removing information about the cell on which a communication session is running and its relationship 18 to at least one neighbouring cell 19 to which a running communication session can be transferred,. The element also comprises resource management software 21 adapted for managing the communication session between the transceivers 12 and the terminal 16. The resource management software consists in radio resource management software managing the transfer of the communication sessions from the cell to one of the neighbouring cells. Such software is more and more used to improve the efficiency of a network, see the background part.

The embodiment according to the present invention further comprises the inventive concept of adapting the register software to enable creating and/or configuring a counter value 20 on each relationship to a neighbouring cell, which value limits the time or number of events the neighbouring cell can be part of so that when the counter value corresponds to a removal value the relationship is removed.

The introduction of the counter value gives the advantage that a relationship will not last forever. Instead it will automatically be removed when the counter value corresponds to a removal value. Consequently, this prevents having a lot of faulty relations defined in the network while still giving the ability to control the extended lifecycle of the important cell relationships.

The difference between the counter value and the removal value is an example of a TimeToLive value. In the inventive embodiment of this application, it intends to limit the period of time or number of events that the relationship can experience before it should be discarded. The removal value is a defined value which the counter value reaches by counting up or down, the counting refers to the period of time or number of events. Consequently, the removal value may be zero or a higher or lower level while the counter value approaches the removal value from a higher or lower value.

An event is for instance iterations or transmission that takes place in the network, such as a handover between two cells. The time to live value can be thought of as an upper bound on the time or events that a relationship can exist in a network. The purpose of the value is to avoid a situation in which useless relationships are kept in the network, and such a network eventually becoming swamped by such information.

Regardless of the introduction of the counter value according to the present invention, the Operation and Maintenance System can always support a manual deletion of an existing relationship at any time.

In order to control the creating and/or the configuring of the relationship and the counter value the network element comprises at least one policy 22 defining the set of rules for these actions. The policies are configured by the network operator in the Operation and Maintenance system and sent to the network element. The policy can as an alternative be configured directly on the network element. However, using the O&M System allow for consistency of policies across a number of network elements.

The method for handling neighbouring cell relationships for a network element will now be described. The element is for instance a base station controller in a cellular network, the network comprising one or more cells being served by at least one transceiver for enabling communication sessions with a mobile cellular terminal. The element communicates with other network nodes within the same or other networks by means described earlier. The method comprises the steps of:
- creating, configuring and/or removing information about the cell on which a communication session is running and its relationship to at least one neighbouring cell to which a running communication session can be transferred,
- managing the communication session between the transceiver and the terminal.

The further inventive step according to the present invention is the creation and/or configuring of a counter value for each relationship to a neighbouring cell. The value limits the time or number of events the neighbouring cell can be part of so that when the counter value corresponds to a removal value the relationship is removed.

The advantage is that the introduction of the counter value makes sure that the relationship will not last forever. Instead it will automatically be removed when the counter value corresponds to the removal value. Consequently, this prevents having a lot of faulty relations defined in the network while still giving the ability to control the extended lifecycle of the important cell relationships.

The removal value is a defined value which the counter value reaches by counting up or down, the counting refers to the period of time or number of events. Consequently, the removal value may be zero or a higher or lower level while the counter value approaches the removal value from a higher or lower value. The difference between the counter value and the removal value is an example of a TimetoLive value.

An event is for instance iterations or transmission that takes place in the network, such as a handover between two cells. Regardless of the introduction of the counter value, the Operation and Maintenance System can always support a manual deletion of an existing relationship at any time.

The relationship and the counter value are created and/or configured based on a set of rules of at least one policy. The policy for these activities defines how they should be made, and depending on how the activities are triggered, the counter value will be set to different values. The policies are configured by the network operator in the Operation and Maintenance system and sent to the network element via the communication means.

If the O&M Management Server 15 monitors a heavy use or a specific behaviour for a particular relationship an update of the counter value is triggered. The value is then changed so that the relationship will last longer. On the other hand, if the server monitors that the relationship is unused or infrequently used the counter value is changed so that the relationship will last shorter. The counter value may even be set to the removal value, which means the relationship will be removed.

The counter value is decreased or increased (counting up or down) continuously, the change being activated by a PM counter, event and/or alarm. The value can also be changed dynamically on the network element by introducing a policy that allows this.

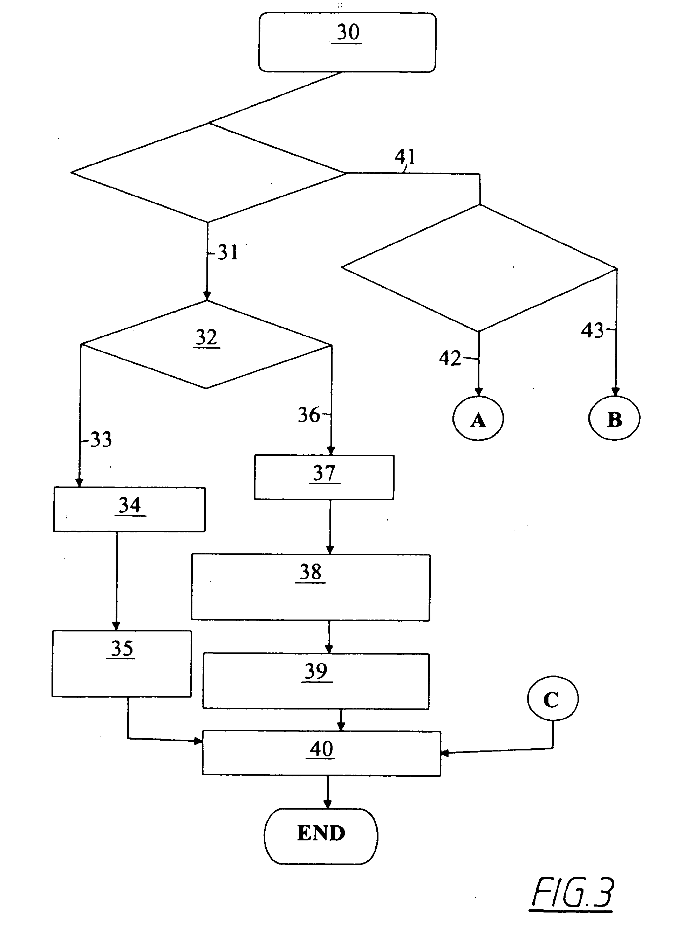

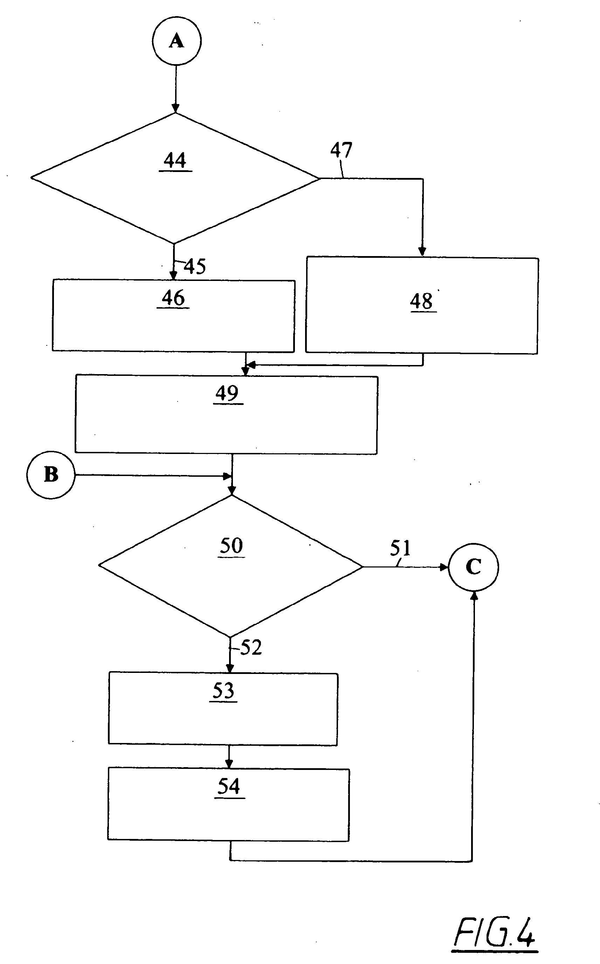

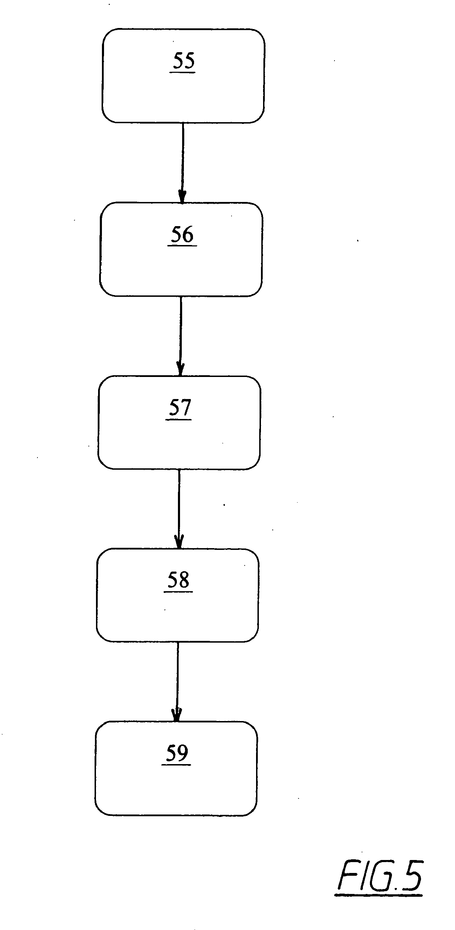

The creation and/or configuration of the relationship and the counter value will now be described with reference to figure 3 and 4. How the network handles the creation and configuration will be described after in relation to figure 5. The relationship and the counter value is created and/or configured by the network element. When this is done (the element informs the O&M System) a policy configuration is issued in the O&M System and on activation the system will use a CM management protocol to create relationships in the network element and the other element nodes containing cells having the relationship.

In one example, see figure 3, the creation and/or configuration policy is triggered 30 when the network operator manually defines 31 a new relationship. In that case, the creation and/or configuration comprise the steps of:
- defining if the relationship should be static 32,
- if the answer is YES 33 set the counter value so that it indicates that the relationship should last forever 34, and then issuing a configuration 35 to indicate that no further actions needs to be taken,
- if the answer is NO 36 set the counter value to a default value enabling counting down 37, define monitors and/or triggers for the update of the counter value (for example specify PM counters, events and alarms) 38 and then issuing a configuration that indicates the actions applicable by the element and each network node managing a neighbouring cell having a relationship 39,
- the configuration being sent to the network element and the network node or nodes managing a neighbouring cell having a relationship 40

The operator cannot manually configure a relationship without associating it to an existing policy on the network element or defining a new policy, with the one exception being the case where the operator creates a totally static relationship.

When the operator manually defines a new relationship that is static (i.e time to live counter does not expire), the O&M system will warn the operator that this relationship will never be dynamically removed if defined in this way and if or, when this relationship is no longer valid it may potentially cause problems. The O&M System health check shall always flag these relations with warning when a health check is executed.

In another example, see figure 3 and 4, the creation and/or configuration policy is triggered 30 by a list defining new geographical neighbouring cell or cells or by a mobile cellular terminal measurement report indicating neighbouring cell or cells. This means that the relationship will not be manually configured by the network operator 41. In one case it is not allowed that the creation and/or configuration is made by the network element communication with a network node controlling the neighbouring cell or cells 43. In that case process of defining if a relationship can be based on a mobile cellular terminal measurement report will be executed, see B.

In another case it is allowed that the creation and/or configuration is made by the network element communicating with a network node controlling the neighbouring cell or cells 42. The creation and/or configuration then comprising the steps of:
- defining if the transport layer supports auto-discovery of the network node for neighbouring cell or cells 44,
- if the answer is YES 45 issuing a configuration that indicates that the network element should query the network node or nodes for potential relationships 46,
- if the answer is NO 47 issuing a configuration that indicates the IP address of the network node or nodes to query for potential relationships 48,
- creating configuration information for the monitoring of communication sessions between the element and the network node or nodes and the triggering for counter value updating 49.

In relation to the example when the creation and/or configuration policy is triggered 30 by a list defining new geographical neighbouring cell or cells or by a mobile cellular terminal measurement report indicating neighbouring cell or cells 41, the further steps are made:
- defining if a relationship can be based on a mobile cellular terminal measurement report 50,
- if the answer is NO 51 the configuration being sent to the network element and the network node or nodes managing a neighbouring cell or cells 40,
- if the answer is YES 52 creating configuration information for the monitoring of communication sessions between the element and the network node or nodes managing a neighbouring cell or cells and the triggering for counter value updating and that they should use the measurement report 53
- issuing a configuration that indicates that the network element and the network node or nodes should use the measurement reports, configuring the monitoring and triggering 54 and sending the configuration to the network element and the network node or nodes 40.

How the network handles the creation and configuration will now be described in relation to figure 5. When the creation and/or configuration of the relationship and the counter value is made 55 the following steps are made:
- sending (made by the network element) configuration information to at least one network node, the node being the Operation and Maintenance Server, about the created or configured relationship and counter value 56,
- a communication link is created between the network element managing the cell involved in the communication session and the network node or nodes managing the neighbouring cell or cells 57 by issuing a configuration request to the network element and the network node or nodes managing a neighbouring cell 58,
- an Operation and Maintenance System starts monitoring the traffic through the communication link via PM counters, events and/or alarms 59.

The counter value is then updated when at certain conditions for the communication traffic is triggered by the system.

The communication link between the network element and another network node can be created directly between these two in a LTE. In WCDMA, the network element and network node is a radio network controller. For LTE, there are two ways to create this link. If the inter network element protocol supports self configuration, the O&M server will provide the authentication support required to allow the network element setup a connection to the node. If dynamic configuration between the network element and the node is not supported the O&M Server shall identify the changes needed and issue configuration requests to both the network element and the node to set up the signalling link between them.

The present invention also relates to a cellular network comprising one or more local cells being served by at least one transceiver, the network comprising a network element and in which the new method for handling neighbouring cells is executed. The network is a mobile phone network, such as GSM or UMTS. The network nodes and the element forms parts of the cellular network and/or a management system. At least one network node is an Operation and Maintenance Server communicating with the network element via a configuration management interface.

## Claims

1. Network Element (10), such as a base station controller, for a cellular network comprising one or more cells (11,19) being served by at least one transceiver for enabling communication sessions with a mobile cellular terminal, the element comprising communication means (13) adapted for communicating with other network nodes (12, 14, 15, 16) within the same or other networks, the element further comprising:
- register software (17) adapted for creating, configuring and/or removing information about the cell (11) on which a communication session is running and its relationship (18) to at least one neighbouring cell (19) to which a running communication session can be transferred,
- resource management software (21) adapted for managing the communication session between the transceiver and the terminal,
- the register software (17) is further adapted for creating and/or configuring a counter value (20) on each relationship to a neighbouring cell (19), which value (20) limits the time the neighbouring cell (19) can be part of the relationship so that when the counter value (20) corresponds to a removal value the relationship (18) is removed, and further adapted to change the counter value (20) if the relationship (18) is used or exhibits a specific behaviour, so that the relationship will last longer, **characterized in that** the counter value (20) consist in a time-to-live counter value.

2. Network element (10) according to claim 1 wherein the network element (10) further comprising at least one policy (22) defining the set of rules for the creating, configuring and/or removing of relationship (18) to the neighbouring cell or cells (19).

3. Network element according to claim 1 or claim 2 wherein the network element (10) further comprising at least one policy (22) defining the set of rules for creating and/or configuring the counter value (20).

4. Network element according to any of the preceding claims wherein the resource management software (21) consists in radio resource management software managing the transfer of the communication sessions from the cell (11) to one of the neighbouring cells (19).

5. Method for handling neighbouring cell relationships for a network element, such as a base station controller in a cellular network, the network comprising one or more cells being served by at least one transceiver for enabling communication sessions with a mobile cellular terminal, the element communicating with other network nodes within the same or other networks, the method comprises the steps of:
- creating, configuring and/or removing information about the cell on which a communication session is running and its relationship to at least one neighbouring cell to which a running communication session can be transferred,
- managing the communication session between the transceiver and the terminal,
- creating and/or configuring a counter value for each relationship to a neighbouring cell, which value limits the time the neighbouring cell can be part of the relationship so that when the counter value corresponds to a removal value the relationship is removed, wherein the counter value (20) is changed if the relationship (18) is used or exhibits a specific behaviour, so that the relationship will last longer, **characterized in that** the counter value (20) consist in a time-to-live counter value.

6. Method according to claim 5 wherein the relationship and the counter value is created and/or configured based on a set of rules of at least one policy (22).

7. Method according to any of the claims 5 - 6 wherein the counter value (20) is changed if the relationship (18) is unused so that the relationship will last shorter.

8. Method according to any of the claims 5-7 wherein the counter value (20) is decreased continuously, a decrease being activated by a PM counter, event and/or alarm.

9. Method according to claim 6 wherein the creation and/or configuration policy for the relationship and the counter value is triggered (30) by a list defining new geographical neighbouring cell or cells or by a mobile cellular terminal measurement report indicating neighbouring cell or cells (41).

10. Method according to claim 9 wherein the creation and/or configuration of the relationship and the counter value is made by the network element communicating with a node or nodes managing a neighbouring cell or cells (42), the creation and/or configuration of the relationship and the counter value comprising the steps of:
- defining if the transport layer supports auto-discovery of node or nodes managing a neighbouring cell or cells (44),
- if the answer is YES (45) issuing a configuration that indicates that the network element should query the node or nodes for potential relationships (46),
- if the answer is NO (47) issuing a configuration that indicates the IP address of the network node or nodes to query for potential relationships (48),
- creating configuration information for the monitoring of communication sessions between the element and the node or nodes and the triggering for counter value updating (49).

11. Method according to claim 10 wherein the creation and/or configuration of the relationship and the counter value comprises the steps of:
- defining if a relationship can be based on a mobile cellular terminal measurement report (50),
- if the answer is NO (51) the configuration being sent to the network element and the node or nodes managing a neighbouring cell or cells (40),
- if the answer is YES (52) creating configuration information for the monitoring of communication sessions between the element and network node or nodes managing a neighbouring cell or cells and the triggering for counter value updating and that the network node or nodes should use the measurement report (53),
- issuing a configuration that indicates that the network element and the network node or nodes should use the measurement reports, configuring the monitoring and triggering (54) and sending the configuration to the network element and the network node or nodes (40).

12. A cellular network comprising one or more local cells (11,19) being served by at least one transceiver (12), the network comprising a network element (10, 14), such as a base station controller, for a cellular network comprising one or more cells (11,19) being served by at least one transceiver for enabling communication sessions with a mobile cellular terminal, the element comprising communication means (13) adapted for communicating with other network nodes (12, 14, 15, 16) within the same or other networks, the element further comprising:
- register software (17) adapted for creating, configuring and/or removing information about the cell (11) on which a communication session is running and its relationship (18) to at least one neighbouring cell (19) to which a running communication session can be transferred,
- resource management software (21) adapted for managing the communication session between the transceiver and the terminal,
- the register software (17) is further adapted for creating and/or configuring a counter value (20) on each relationship to a neighbouring cell (19), which value (20) limits the time the neighbouring cell (19) can be part of the relationship so that when the counter value (20) corresponds to a removal value the relationship (18) is removed, and further adapted to change the counter value (20) if the relationship (18) is used or exhibits a specific behaviour, so that the relationship will last longer, **characterized in that** the counter value (20) consist in a time-to-live counter value.

13. A cellular network according to claim 12 wherein the network node or nodes (12, 14, 15, 16) and the element (10) form parts of the cellular network and/or a management system.

## Patentansprüche

1. Netzelement (10), wie beispielsweise eine Basisstationssteuerung, für ein zellulares Mobilfunknetz, das eine oder mehrere Zellen (11, 19) umfasst, die durch mindestens einen Sendeempfänger zum Ermöglichen von Kommunikationssitzungen mit einem mobilen zellularen Endgerät versorgt werden, wobei das Element Kommunikationsmittel (13) umfasst, die zur Kommunikation mit anderen Netzknoten (12, 14, 15, 16) innerhalb der gleichen oder anderer Netze ausgelegt sind, wobei das Element ferner umfasst:
- Registersoftware (17), die zum Erstellen, Konfigurieren und/oder Entfernen von Informationen über die Zelle (11), in welcher eine Kommunikationssitzung läuft, und ihre Beziehung (18) zu mindestens einer Nachbarzelle (19), zu welcher eine laufende Kommunikationssitzung übertragen werden kann, ausgelegt ist,
- Betriebsmittelverwaltungssoftware (21), die zum Verwalten der Kommunikationssitzung zwischen dem Sendeempfänger und dem Endgerät ausgelegt ist,
- wobei die Registersoftware (17) ferner zum Erstellen und/oder Konfigurieren eines Zählerwerts (20) bei jeder Beziehung zu einer Nachbarzelle (19) ausgelegt ist, wobei der Wert (20) die Zeit begrenzt, welche die Nachbarzelle (19) ein Teil der Beziehung sein kann, so dass, wenn der Zählerwert (20) einem Entfernungswert entspricht, die Beziehung (18) entfernt wird, und ferner so ausgelegt ist, dass sie den Zählerwert (20) ändert, wenn die Beziehung (18) verwendet wird oder ein spezifisches Verhalten an den Tag legt, so dass die Beziehung länger dauert, **dadurch gekennzeichnet, dass** der Zählerwert (20) aus einem Lebensdauerzählerwert besteht.

2. Netzelement (10) nach Anspruch 1, wobei das Netzelement (10) ferner mindestens eine Richtlinie (22) umfasst, die den Regelsatz für das Erstellen, Konfigurieren und/oder Entfernen der Beziehung (18) zu der Nachbarzelle oder den Nachbarzellen (19) definiert.

3. Netzelement nach Anspruch 1 oder 2, wobei das Netzelement (10) ferner mindestens eine Richtlinie (22) umfasst, die den Regelsatz zum Erstellen und/oder Konfigurieren des Zählerwerts (20) definiert.

4. Netzelement nach einem der vorhergehenden Ansprüche, wobei die Betriebsmittelverwaltungssoftware (21) aus Funkbetriebsmittelverwaltungssoftware besteht, welche die Übertragung der Kommunikationssitzungen von der Zelle (11) zu einer der Nachbarzellen (19) verwaltet.

5. Verfahren zum Abwickeln von Nachbarzellbeziehungen für ein Netzelement, wie beispielsweise eine Basisstationssteuerung, in einem zellularen Netz, wobei das Netz eine oder mehrere Zellen umfasst, die durch mindestens einen Sendeempfänger zum Ermöglichen von Kommunikationssitzungen mit einem mobilen zellularen Endgerät versorgt werden, wobei das Element mit anderen Netzknoten innerhalb des gleichen oder anderer Netze kommuniziert, und das Verfahren die folgenden Schritte umfasst:
- Erstellen, Konfigurieren und/oder Entfernen von Informationen über die Zelle, in welcher eine Kommunikationssitzung läuft, und ihre Beziehung zu mindestens einer Nachbarzelle, zu welcher eine laufende Kommunikationssitzung übertragen werden kann, ausgelegt ist,
- Verwalten der Kommunikationssitzung zwischen dem Sendeempfänger und dem Endgerät,
- Erstellen und/oder Konfigurieren eines Zählerwerts für jede Beziehung zu einer Nachbarzelle, wobei der Wert die Zeit begrenzt, welche die Nachbarzelle ein Teil der Beziehung sein kann, so dass, wenn der Zählerwert einem Entfernungswert entspricht, die Beziehung entfernt wird, und wobei der Zählerwert (20) geändert wird, wenn die Beziehung (18) verwendet wird oder ein spezifisches Verhalten an den Tag legt, so dass die Beziehung länger dauert, **dadurch gekennzeichnet, dass** der Zählerwert (20) aus einem Lebensdauerzählerwert besteht.

6. Verfahren nach Anspruch 5, wobei die Beziehung und der Zählerwert basierend auf einem Regelsatz von mindestens einer Richtlinie (22) erstellt und/oder konfiguriert werden.

7. Verfahren nach einem der Ansprüche 5 bis 6, wobei der Zählerwert (20) geändert wird, wenn die Beziehung (18) nicht verwendet wird, so dass die Beziehung kürzer dauert.

8. Verfahren nach einem der Ansprüche 5 bis 7, wobei der Zählerwert (20) kontinuierlich herabgesetzt wird, wobei eine Herabsetzung durch einen PM-Zähler, ein Ereignis und/oder einen Alarm aktiviert wird.

9. Verfahren nach Anspruch 6, wobei die Erstellungs-und/oder Konfigurationsrichtlinie für die Beziehung und den Zählerwert durch eine Liste, die eine neue geografische Nachbarzelle oder neue geografische Nachbarzellen definiert, oder durch einen Messbericht eines mobilen zellularen Endgeräts, der eine Nachbarzelle oder Nachbarzellen anzeigt (41), ausgelöst (30) wird.

10. Verfahren nach Anspruch 9, wobei die Erstellung und/oder Konfiguration der Beziehung und des Zählerwerts durch das Netzelement erfolgt, das mit einem Knoten oder Knoten kommuniziert, der/die eine Nachbarzelle oder Nachbarzellen verwaltet bzw. verwalten (42), wobei die Erstellung und/oder Konfiguration der Beziehung und des Zählerwerts die folgenden Schritte umfasst:
- Definieren, ob die Transportschicht eine automatische Erkennung eines Knotens oder von Knoten unterstützt, der/die eine Nachbarzelle oder Nachbarzellen verwaltet bzw. verwalten (44),
- Ausgeben, wenn die Antwort JA ist (45), einer Konfiguration, die anzeigt, dass das Netzelement den Knoten oder die Knoten auf potenzielle Beziehungen abfragen sollte (46),
- Ausgeben, wenn die Antwort NEIN ist (47), einer Konfiguration, welche die IP-Adresse des Netzknotens oder der Netzknoten anzeigt, der/die auf potenzielle Beziehungen abgefragt werden soll bzw. sollen (48),
- Erstellen von Konfigurationsinformationen für das Überwachen von Kommunikationssitzungen zwischen dem Element und dem Knoten oder den Knoten und das Auslösen für eine Zählerwertaktualisierung (49).

11. Verfahren nach Anspruch 10, wobei die Erstellung und/oder Konfiguration der Beziehung und des Zählerwerts die folgenden Schritte umfasst:
- Definieren, ob eine Beziehung auf einem Messbericht eines mobilen zellularen Endgeräts basieren kann (50),
- wobei, wenn die Antwort NEIN ist (51), die Konfiguration an das Netzelement und den oder die Knoten gesendet wird, der/die eine Nachbarzelle oder Nachbarzellen verwaltet bzw. verwalten (40),
- Erstellen, wenn die Antwort JA ist (52), von Konfigurationsinformationen für das Überwachen von Kommunikationssitzungen zwischen dem Element und dem Netzknoten oder den Netznoten, der/die eine Nachbarzelle oder Nachbarzellen verwaltet bzw. verwalten, und das Auslösen für eine Zählerwertaktualisierung und, dass der Netzknoten oder die Netzknoten den Messbericht verwenden sollten (53),
- Ausgeben einer Konfiguration, die anzeigt, dass das Netzelement und der Netzknoten oder die Netzknoten die Messberichte verwenden sollten, Konfigurieren des Überwachens und Auslösens (54) und Senden der Konfiguration an das Netzelement und den Netzknoten oder die Netzknoten (40).

12. Zellulares Mobilfunknetz, umfassend eine oder mehrere lokale Zellen (11, 19), die durch mindestens einen Sendeempfänger (12) versorgt werden, wobei das Netz ein Netzelement (10, 14), wie beispielsweise eine Basisstationssteuerung, für ein zellulares Mobilfunknetz umfasst, das eine oder mehrere Zellen (11, 19) umfasst, die durch mindestens einen Sendeempfänger zum Ermöglichen von Kommunikationssitzungen mit einem mobilen zellularen Endgerät Versorgt werden, wobei das Element Kommunikationsmittel (13) umfasst, die zur Kommunikation mit anderen Netzknoten (12, 14, 15, 16) innerhalb der gleichen oder anderer Netze ausgelegt sind, wobei das Element ferner umfasst:
- Registersoftware (17), die zum Erstellen, Konfigurieren und/oder Entfernen von Informationen über die Zelle (11), in welcher eine Kommunikationssitzung läuft, und ihre Beziehung (18) zu mindestens einer Nachbarzelle ( 19 ), z u welcher eine laufende Kommunikationssitzung übertragen werden kann, ausgelegt ist,
- Betriebsmittelverwaltungssoftware (21), die zum Verwalten der Kommunikationssitzung zwischen dem Sendeempfänger und dem Endgerät ausgelegt ist,
- wobei die Registersoftware (17) ferner zum Erstellen und/oder Konfigurieren eines Zählerwerts (20) bei jeder Beziehung zu einer Nachbarzelle (19) ausgelegt ist, wobei der Wert (20) die Zeit begrenzt, welche die Nachbarzelle (19) ein Teil der Beziehung sein kann, so dass, wenn der Zählerwert (20) einem Entfernungswert entspricht, die Beziehung (18) entfernt wird, und ferner so ausgelegt ist, dass sie den Zählerwert (20) ändert, wenn die Beziehung (18) verwender wird oder ein spezifisches Verhalten an den Tag legt, so dass die Beziehung länger dauert, **dadurch gekennzeichnet dass** der Zählerwert (20) aus einem Lebensdauerzählerwert besteht.

13. Zellulares Mobilfunknetz nach Anspruch 12, wobei der Netzknoten oder die Netzknoten (12, 14, 15, 16) und das Element (10) zu dem zellularen Mobilfunknetz und/oder einem Verwaltungssystem gehören.

## Revendications

1. Elément de réseau (10), tel qu'un contrôleur de station de base, pour un réseau cellulaire comprenant une ou plusieurs cellules (11,19) étant desservies par au moins un émetteur-récepteur pour permettre des sessions de communication avec un terminal cellulaire mobile, l'élément comprenant un moyen de communication (13) adapté pour communiquer avec d'autres noeuds de réseau (12,14,15,16) à l'intérieur du même ou d'autres réseaux, l'élément comprenant en outre :
- un logiciel de registre (17) adapté pour créer, configurer et/ou supprimer des informations concernant la cellule (11) sur laquelle une session de communication est en cours d'exécution et sa relation (18) avec au moins une cellule voisine (19) vers laquelle une session de communication en cours d'exécution peut être transférée,
- un logiciel de gestion de ressource (21) adapté pour gérer la session de communication entre l'émetteur-récepteur et le terminal,
- le logiciel de registre (17) est en outre adapté pour créer et/ou configurer une valeur de compteur (20) sur chaque relation avec une cellule voisine (19), laquelle valeur (20) limite la durée pendant laquelle la cellule voisine (19) peut en faire partie de sorte que quand la valeur de compteur (20) correspond à une valeur de suppression, la relation (18) est supprimée, et en outre adapté pour changer la valeur de compteur (20) si la relation (18) est utilisée ou présente un comportement spécifique, de sorte que la relation durera plus longtemps, **caractérisé en ce que** la valeur de compteur (20) consiste en une valeur de compteur de durée de vie.

2. Elément de réseau (10) selon la revendication 1, dans lequel l'élément de réseau (10) comprend en outre au moins une politique (22) définissant l'ensemble de règles pour la création, configuration et/ou suppression de relation (18) avec la ou les cellules voisines (19).

3. Elément de réseau selon la revendication 1 ou 2, dans lequel l'élément de réseau (10) comprend en outre au moins une politique (22) définissant l'ensemble de règles pour créer et/ou configurer la valeur de compteur (20).

4. Elément de réseau selon une quelconque des revendications précédentes, dans lequel le logiciel de gestion de ressources (21) consiste en un logiciel de gestion de ressources radio gérant le transfert des sessions de communication de la cellule (11) vers une des cellules voisines (19).

5. Procédé de gestion des relations avec les cellules voisines pour un élément de réseau, comme un contrôleur de station de base dans un réseau cellulaire, le réseau comprenant une ou des cellules étant desservies par au moins un émetteur-récepteur pour permettre des sessions de communication avec un terminal cellulaire mobile, l'élément communiquant avec d'autres noeuds de réseau à l'intérieur du même ou d'autres réseaux, le procédé comprenant les étapes de :
- création, configuration et/ou suppression d'information concernant la cellule sur laquelle une session de communication est en cours d'exécution et sa relation avec au moins une cellule voisine vers laquelle une session de communication en cours d'exécution peut être transférée,
- gestion de la session de communication entre l'émetteur-récepteur et le terminal,
- création et/ou configuration d'une valeur de compteur pour chaque relation avec une cellule voisine, laquelle valeur limite la durée pendant laquelle la cellule voisine peut en faire partie de sorte que quand la Valeur de compteur correspond à une valeur de suppression, la relation est supprimée, et en outre adapté pour changer la valeur de compteur (20) si la relation (18) est utilisée ou présente un comportement spécifique, de sorte que la relation durera plus longtemps, **caractérisé en ce que** la valeur de compteur (20) consiste en une valeur de compteur de durée de vie.

6. Procédé selon la revendication 5, dans lequel la relation et la valeur de compteur est créée et/ou configurée sur la base d'un ensemble de règles d'au moins une politique (22).

7. Procédé selon une quelconque des revendications 5 à 6, dans lequel la valeur de compteur (20) est changée si la relation (18) est non utilisée de sorte que la relation durera moins longtemps.

8. Procédé selon une quelconque des revendications 5 à 7, dans lequel la valeur de compteur (20) est diminuée en continu, une diminution étant activée par un compteur PM, un évènement et/ou une alarme.

9. Procédé selon la revendication 6, dans lequel la politique de création et/ou configuration pour la relation et la valeur de compteur est déclenchée (30) par une liste définissant une ou des nouvelles cellules géographiques voisines ou par un rapport de mesure de terminal cellulaire mobile indiquant la ou les cellules voisines (41).

10. Procédé selon la revendication 9, dans lequel la création et/ou configuration de la relation et de la valeur de compteur est faite par l'élément de réseau communiquant avec un ou des noeuds gérant une ou des cellules voisines (42), la création et/ou configuration de la relation et la valeur de compteur comprenant les étapes consistant à :
- définissant si la couche de support prend en charge une auto-découverte du noeud ou des noeuds gérant une cellule ou des cellules voisines (44),
- si la réponse est OUI (45), émettre une configuration qui indique que l'élément de réseau devrait interroger le ou les noeuds sur les relations potentielles (46),
- si la réponse est NON (47), émettre une configuration qui indique l'adresse IP du noeud ou des noeuds de réseau à interroger sur des relations potentielles (48),
- créer une information de configuration pour la surveillance de sessions de communication entre l'élément et le ou les noeuds et le déclenchement de la mise à jour de valeur de compteur (49).

11. Procédé selon la revendication 10, dans lequel la création et/ou configuration de la relation et la valeur de compteur comprend les étapes consistant à :
- définir si une relation peut être basée sur un rapport de mesure de terminal cellulaire mobile (50),
- si la réponse est NON (51), la configuration est envoyée à l'élément de réseau et le ou les noeuds gérant une ou des cellules voisines (40),
- si la réponse est OUI (52), créer une information de configuration pour la surveillance de sessions de communication entre l'élément et le ou les noeuds de réseau gérant une ou des cellules voisines et le déclenchement de la mise à jour de valeur de compteur et que le ou les noeuds de réseau devrait utiliser le rapport de mesure (53),
- émettre une configuration qui indique que l'élément de réseau et le ou les noeuds de réseau devraient utiliser les rapports de mesure, configurer la surveillance et le déclenchement (54) et envoyer la configuration à l'élément de réseau et au ou aux noeuds de réseau (40).

12. Réseau cellulaire comprenant une ou des cellules locales (11,19) étant desservies par au moins un émetteur-récepteur (12), le réseau comprenant un élément de réseau (10,14), comme un contrôleur de station de base, pour un réseau cellulaire comprenant une ou des cellules (11,19) étant desservies par au moins un émetteur-récepteur pour permettre des sessions de communication avec un terminal cellulaire mobile, l'élément comprenant un moyen de communication (13) adapté pour communiquer avec d'autres noeuds de réseau (12,14,15,16) à l'intérieur du même ou d'autres réseaux, l'élément comprenant en outre :
- un logiciel de registre (17) adapté pour créer, configurer et/ou supprimer des informations concernant la cellule (11) sur laquelle une session de communication est en cours d'exécution et sa relation (18) avec au moins une cellule voisine (19) vers laquelle une session de communication en cours d'exécution peut être transférée,
- un logiciel de gestion de ressource (21) adapté pour gérer la session de communication entre l'émetteur-récepteur et le terminal,
- le logiciel de registre (17) est en outre adapté pour créer et/ou configurer une valeur de compteur (20) sur chaque relation avec une cellule voisine (19), laquelle valeur (20) limite la durée pendant laquelle la cellule voisine (19) peut en faire partie de sorte que quand la valeur de compteur (20) correspond à une valeur de suppression, la relation (18) est supprimée, et en outre adapté pour changer la valeur de compteur (20) si la relation (18) est utilisée ou présente un comportement spécifique, de sorte que la relation durera plus longtemps, **caractérisé en ce que** la valeur de compteur (20) consiste en une valeur de compteur de durée de vie.

13. Réseau cellulaire selon la revendication 12, dans lequel le ou les noeuds de réseau (12,14,15,16) et l'élément (10) font partie du réseau de cellulaire et/ou d'un système de gestion.
